# EUROPEAN PATENT APPLICATION

(11) **EP 3 163 512 A1**
(43) Date of publication of application: **03.05.2017**
(21) Application number: 15306731.9
(22) Date of filing: 30.10.2015
(51) Int. Cl.: G06N 3/00, G06N 99/00

(54) **DATA PROCESSING APPARATUS AND METHOD FOR RECOVERING A CORRECT CODE SYMBOL SEQUENCE FROM MULTIPLE INCORRECT COPIES**

(71) Applicant: Thomson Licensing, 92130 Issy-les-Moulineaux (FR)
(72) Inventor: Chen, Xiaoming, 30659 Hannover (DE); Blawat, Meinolf, 30659 Hannover (DE); Gaedke, Klaus, 30659 Hannover (DE); Huetter, Ingo, 30982 Pattensen (DE)
(74) Representative: Huchet, Anne

(57) **Abstract**

For recovering data stored in nucleic acid molecules, where multiple molecule copies carrying the same data exist, errors in a code symbol sequence retrieved from the molecules are corrected based on dynamic programming aided processing. Potentially incorrect copies of the code symbol sequence are obtained (101) from a sequencer and divided (102) into first set of sequences of correct length and second of incorrect lengths, and then, recursively, a reference sequence of correct length is determined (103) from the first set, its integrity checked (104), a test sequence selected (105) from the second set, a minimum number of edit operations and positions within the test sequence calculated (106) for transforming reference into test sequence, a modified sequence of correct length obtained (107) by modifying the test sequence at said positions, and the modified sequence added (108) to the first set; until the integrity check indicates correctness of the reference sequence.

## Description

### FIELD

The present disclosure is related to the recovery of data stored in nucleic acid molecules, such as synthesized, i.e. artificially created, DNA (Deoxyribonucleic Acid) molecules or oligonucleotides. Here, due to employed amplification, i.e. multiple duplication, processes, multiple copies of nucleic acid molecules carrying the same data exist. More particularly, the present principles relate to the correction of errors in code symbol sequences retrieved from the corresponding nucleic acid molecules. A data processing apparatus and a method of operating the apparatus to recover a correct copy of a code symbol sequence from a plurality of potentially incorrect copies of the code symbol sequence are presented, as well as a corresponding computer program and program storage device.

### BACKGROUND

Storing data in sequences of nucleotides of artificially generated DNA molecules has been investigated in "Next-generation digital information storage", Church et al., Science 337, 1628, 2012 [I], and in "Towards practical, high-capacity, low-maintenance information storage in synthesized DNA", Goldman et al., Nature, vol. 494, 2013 [II]. DNA as a storage medium exhibits desired storage properties such as longevity, huge storage density, and low-cost for maintenance.

Strands of DNA (Deoxyribonucleic Acid) or RNA (Ribonucleic Acid) fragments (oligonucleotides, short: oligos) can be generated or synthesized, using a nucleic acid synthesizer, as sequences of four different nucleotides identified by their respective nucleobases, namely Adenine, Thymine, Cytosine and Guanine, shortly denoted as A, T, C and G, for DNA, or, respectively, Adenine, Uracil, Cytosine and Guanine, shortly denoted as A, U, C and G, for RNA. The order of the nucleotides forming the oligo is used to store code symbol sequences, for example sequences of quaternary code symbols, representing user data, for example provided as sequences of binary code symbols. Nucleic acid sequencers are used to readout the sequence of nucleotides, i.e. to transform an oligo into its corresponding code symbol sequence. The described biochemical processing usually requires multiple copies of the same oligo in order to function. Therefore, the processing comprises an amplification of the oligos, i.e. multiple duplication of the oligos, for example using Polymerase Chain Reaction (PCR).

Typically an address is encoded in each oligo to identify the correct order of readout oligos, respectively code symbol sequences, after sequencing.

The oligos are imposed to possible substitution, deletion, and insertion errors during the synthesizing, amplification and sequencing processes, as nucleotides may be randomly substituted with others, completely deleted or inserted into oligos at various locations. On the other hand, multiple readout oligos associated to a same address are available. Some of the readout oligos originate from the same oligo, while different lengths other than the original oligo length are generated due to deletions and/or insertions.

Conventionally, sequenced oligos, respectively readout code symbol sequences, with wrong lengths, i.e. consisting of a wrong number of code symbols, are discarded, see [I] and [II], as it is assumed that other sequenced oligos associated to the same address will be available.

As shown in [I] and [II], the number of readout oligos associated to a same address exhibits a bell-shape distribution. Therefore, for some addresses there are fewer associated oligos for readout than for others. And the amount of readout oligos, respectively code symbol sequences, with a correct length is even smaller for these addresses. Therefore, discarding of readout code symbol sequences with wrong lengths results in some originally encoded code symbol sequences not being recoverable at all or only at the cost of additional error correction coding techniques. For example, if for an address, only one readout code symbol sequence exhibiting the correct length remains available, but which has been subject to some substitution errors while still exhibiting the correct length, the code symbol sequence corresponding to the original oligo cannot be recovered, if no additional error correction coding technique has been employed.

There remains a need to improve the performance of data retrieval from sequenced oligos in the presence of insertion, substitution and/or deletion errors.

### SUMMARY

A data processing apparatus for recovering a correct copy of a code symbol sequence from a plurality of potentially incorrect copies of the code symbol sequence, a method of operating a data processing apparatus, as well as a corresponding computer program and non-transitory program storage device according to the appended claims are suggested, wherein an availability of multiple copies or instances of the same code symbol sequence is exploited to detect and correct insertion, deletion and substitution errors.

According to one aspect of the present principles, a method of operating a data processing apparatus to recover a correct copy of a code symbol sequence from a plurality of potentially incorrect copies of the code symbol sequence comprises:
- obtaining a plurality of potentially incorrect copies of a code symbol sequence from a nucleic acid sequencer device adapted to transform nucleotide sequences into corresponding code symbol sequences;
- dividing said plurality of potentially incorrect copies into a first set of code symbol sequences of a correct length and a second set of code symbol sequences of incorrect lengths; and recursively
- determining a reference sequence of the correct length from the first set;
- performing an integrity check of the reference sequence;
- selecting a code symbol sequence from the second set as a test sequence;
- calculating a minimum number of edit operations and corresponding one or more positions within the test sequence for transformation of the reference sequence into the test sequence;
- obtaining a modified sequence of the correct length by modifying the test sequence at said corresponding one or more positions; and
- adding the modified sequence to the first set;
until the integrity check indicates correctness of the reference sequence.

In one embodiment the correct reference sequence is then provided to a decoder device for further processing of the correct code symbol sequences and decoding of the user data. In another embodiment the corrected reference sequence is stored in a memory for later processing.

A code symbol sequence is a set of subsequent code symbols in the form of an electronic signal, for example quaternary code symbols with each code symbol value corresponding to a nucleotide type. As another example, a code symbol sequence can also be a sequence of binary code symbols.

A data processing apparatus is or comprises, for example, a computer or other device capable of processing the data. The data processing apparatus comprises or is connected or connectable to the nucleic acid sequencer device or module capable of transforming nucleotide sequences into corresponding code symbol sequences, which is connected or connectable to obtain the oligos, e.g. from a nucleic acid storage container. The method may be implemented as part of or as a preprocessing for a decoding of code symbol sequences in a decoder, wherein only incorrect copies are supplied to the data processing apparatus executing the described method, while otherwise, i.e. if at least one copy of the code symbol sequence is found correct, said correct copy is decoded by the decoder.

The term "edit operation" refers to any of an insertion, deletion and substitution operation applied to a code symbol sequence.

The term "set" refers to a collection of one or more distinct items. The term "multiple" refers to a plurality of items.

The correct length of a code symbol sequence may be a constant value or a variable parameter stored in or provided to the data processing apparatus separately or encoded in the nucleotide sequences and may depend on the synthesizer device used to generate the oligos.

Determining a reference sequence refers to calculating the reference sequence from the first set of code symbol sequences including, after the first modification, the modified sequence or modified sequences.

An integrity check is a verification of a correctness of the checked code symbol sequence, for example by means of a calculation of a checksum.

Modifying the test sequence and adding the modified sequence to the first set comprises that the test sequence is removed from the second set of code symbol sequences.

Accordingly, a data processing apparatus for recovering a correct copy of a code symbol sequence from a plurality of potentially incorrect copies of the code symbol sequence comprises:
- a nucleic acid sequencer module configured to transform nucleotide sequences into corresponding code symbol sequences;
- an interface module configured to obtain a plurality of potentially incorrect copies of a code symbol sequence from the nucleic acid sequencer device;
- a set generating module configured to divide said plurality of potentially incorrect copies into a first set of code symbol sequences of a correct length and a second set of code symbol sequences of incorrect lengths; and
- a correction module configured to recursively
- determine a reference sequence of the correct length from the first set;
- perform an integrity check of the reference sequence;
- select a code symbol sequence from the second set as a test sequence;
- calculate a minimum number of edit operations and corresponding one or more positions within the test sequence for transformation of the reference sequence into the test sequence;
- obtain a modified sequence of the correct length by modifying the test sequence at said corresponding one or more positions; and
- add the modified sequence to the first set;
until the integrity check indicates correctness of the reference sequence.

Different embodiments of the data processing apparatus for recovering a correct copy of a code symbol sequence from a plurality of potentially incorrect copies of the code symbol sequence are available: The nucleic acid sequencer module, the interface module, the set generating module and the correction module can be provided as separate devices or jointly as one apparatus. The interface module, the set generating module and the correction module may also be provided as functionality carried out or implemented by a processor, microprocessor, microcontroller or other processing device, computer or other programmable apparatus or processing assembly connected to or comprising a memory and the nucleic acid sequencer module.

In one embodiment a data processing device for recovering a correct copy of a code symbol sequence from a plurality of potentially incorrect copies of the code symbol sequence comprises a processor assembly configured to, for example programmed to, implement the described method.

According to one aspect of the present principles, a data processing apparatus for recovering a correct copy of a code symbol sequence from a plurality of potentially incorrect copies of the code symbol sequence, comprises a processor and a memory device storing instructions that, when executed, cause the processor (502) to
- obtain a plurality of potentially incorrect copies of a code symbol sequence from a nucleic acid sequencer device adapted to transform nucleotide sequences into corresponding code symbol sequences;
- divide said plurality of potentially incorrect copies into a first set of code symbol sequences of a correct length and a second set of code symbol sequences of incorrect lengths; and
   recursively
- determine a reference sequence of the correct length from the first set;
- perform an integrity check of the reference sequence;
- select a code symbol sequence from the second set as a test sequence;
- calculate a minimum number of edit operations and corresponding one or more positions within the test sequence for transformation of the reference sequence into the test sequence;
- obtain a modified sequence of the correct length by modifying the test sequence at said corresponding one or more positions; and
- add the modified sequence to the first set;
until the integrity check indicates correctness of the reference sequence.

Further, according to one aspect of the present principles, a computer program comprises code instructions executable by a processor for implementing a method for recovering a correct copy of a code symbol sequence from a plurality of potentially incorrect copies of the code symbol sequence, comprising
- obtaining a plurality of potentially incorrect copies of a code symbol sequence from a nucleic acid sequencer device adapted to transform nucleotide sequences into corresponding code symbol sequences;
- dividing said plurality of potentially incorrect copies into a first set of code symbol sequences of a correct length and a second set of code symbol sequences of incorrect lengths; and recursively
- determining a reference sequence of the correct length from the first set;
- performing an integrity check of the reference sequence;
- selecting a code symbol sequence from the second set as a test sequence;
- calculating a minimum number of edit operations and corresponding one or more positions within the test sequence for transformation of the reference sequence into the test sequence;
- obtaining a modified sequence of the correct length by modifying the test sequence at said corresponding one or more positions; and
- adding the modified sequence to the first set;
until the integrity check indicates correctness of the reference sequence.

According to another aspect of the present principles, a non-transitory program storage device, readable by a computer, tangibly embodies a program of instructions executable by the computer to perform a method for recovering a correct copy of a code symbol sequence from a plurality of potentially incorrect copies of the code symbol sequence, comprising
- obtaining a plurality of potentially incorrect copies of a code symbol sequence from a nucleic acid sequencer device adapted to transform nucleotide sequences into corresponding code symbol sequences;
- dividing said plurality of potentially incorrect copies into a first set of code symbol sequences of a correct length and a second set of code symbol sequences of incorrect lengths; and recursively
- determining a reference sequence of the correct length from the first set;
- performing an integrity check of the reference sequence;
- selecting a code symbol sequence from the second set as a test sequence;
- calculating a minimum number of edit operations and corresponding one or more positions within the test sequence for transformation of the reference sequence into the test sequence;
- obtaining a modified sequence of the correct length by modifying the test sequence at said corresponding one or more positions; and
- adding the modified sequence to the first set;
until the integrity check indicates correctness of the reference sequence.

The provided solution allows exploitation of an availability of multiple copies of the same code symbol sequence being subject to insertion, deletion and substitution errors in a data storage system where said multiple copies are generated anyway due to requirements of the employed storage technology. Available multiple copies of wrong and correct lengths, containing errors, are employed together to recover the correct content from. In particular, the positions of deletions and insertions are identified by comparing reference sequences, possibly with a correct length, to test sequences with wrong lengths, e.g. by means of dynamic programming. Then the test sequences are modified to have a correct length and the modified test sequences and the other reference sequences are used together to better estimate the original sequence, which improves the system performance with respect to detection rate.

The provided approach at least has the effect that errors in code symbol sequences retrieved from error-prone nucleic acid storage systems can be corrected without a need for applying an error correction scheme requiring addition of many error correction encoding symbols for high redundancy to protect the data sufficiently, that covers the complete original data in order to be able to correct insertion or deletion errors. Furthermore, retrieval of only defective copies is sufficient to derive the correct code symbol sequence from and the need to retrieve a correct code symbol sequence before decoding is avoided. When using oligos with incorrect oligo lengths read out from a nucleic acid storage, the detection rate can be increased. Code symbol sequences which may otherwise not be recovered from sequenced oligos can be recovered. Moreover, the number of total readout oligos to recover all code symbol sequences encoded in oligos may be reduced, i.e., the decoding/sequencing complexity can be reduced.

In one embodiment the determining of the reference sequence comprises performing a majority vote over the first set of code symbol sequences. In case the first set of code symbol sequences comprises a sufficient amount of sequences, the majority vote allows selecting the probably least disturbed sequence as the reference sequence. In another embodiment, the reference sequence is calculated by performing a symbol by symbol majority vote for the sequences of the first set.

In one embodiment the obtaining of a plurality of potentially incorrect copies of a code symbol sequence comprises obtaining a plurality of copies of the code symbol sequence and performing initial integrity checks and selecting a copy of the code symbol sequence as a correct copy if the corresponding initial integrity check indicates no error. In other words, an integrity check mechanism, e.g., by means of cyclic redundancy check, is employed to check the necessity of processing the incorrect code symbol sequences. If there is a copy of the code symbol sequence with correct length satisfying the integrity check, no further processing is necessary and the copy is detected as representing the original code symbol sequence.

In one embodiment the calculating comprises for a reference sequence ***a*** = (*a*₁,*a*₂,...,a*ₙ*) and a test sequence ***b*** = (*b*₁,*b*₂,...,*bₘ*) determining an (*m* + 1) ×(*n* + 1) distance matrix, where distance entries {*d*_{*i*,*j*}, 0 ≤ *i* ≤ m, 0 ≤ *j* ≤ *n*} denote a corresponding minimum edit distance for a transformation from (*a*₁,...,*aⱼ*) to (*b*₁,...,*bᵢ*). The test sequence ***b*** has been obtained from ***a*** via substitution, deletion, and insertion operations, respectively errors. To find the minimum number of such operations, the distance matrix is constructed.

In an example embodiment the distance *d*_{*i*,*j*} is calculated recursively, i.e. recursively for increasing indices i and j until i equals m and j equals n, as *d*_{*i*,*j*} = min{*d*_{*i*,*j*-1} + 1,*d*_{*i*-1,*j*} + 1, *d*_{*i*-1,*j*-1} + *cost*(*aⱼ*,*bᵢ*)}, where *cost*(*aⱼ*,*bᵢ*) represents a distance increase due to substitution and *d*_{*m*,*n*} represents the minimum edit distance between the reference sequence ***a*** and the test sequence ***b*.** In the described embodiment, the distance increase due to an insertion (transformation from a_{*j*-1} to *bᵢ*) or a deletion (transformation from a*ⱼ* to *b*_{*i*-1}) equals 1 and the distance increase due to substitution equals *cost*(*aⱼ*,*bᵢ*). For example, the distance increase *cost*(*aⱼ*,*bᵢ*) can be chosen as *cost*(*aⱼ,bᵢ*) = 0 if *aⱼ* is equal to *bᵢ*, and *cost*(*aⱼ,bᵢ*) = 1 if *aⱼ* differs from *bᵢ*. The distance increases may be defined differently for insertion, deletion, or substitution errors, dependent on application cases. At the end of the recursions, the minimum edit distance between ***a*** and ***b*** is determined as *d*_{*m*,*n*}.

In one embodiment the obtaining of the plurality of potentially incorrect copies of the code symbol sequence comprises evaluating an address part being protected by an error correction coding, of transformed code symbol sequences received from the nucleic acid sequencer device. In order to group copies of readout code symbol sequences corresponding to oligos having encoded the same address, for example a strong error correction code to protect and correct addresses is used. Upon reading out, addresses are decoded by an error correction decoder and the code symbol sequences obtained from the oligos are clustered according to decoded addresses. The determination of copies of code symbol sequences as belonging to the same plurality of potentially incorrect copies, thereby, becomes more reliable, as defective identifiers can be corrected.

In one embodiment the selecting of the test sequence from the second set, the calculating of the minimum number of edit operations and corresponding one or more positions, the obtaining of the modified sequence and the adding of the modified sequence to the first set are performed for a plurality of test sequences in parallel, thereby further speeding up the processing. Consequently, multiple modified sequences are then added to the updated first set, i.e. the reference subset, and multiple test sequences are deleted from the updated second set, i.e. the test subset.

In one embodiment more than one modified sequence is obtained from the test sequence and added to the first set, if the calculating of the minimum number of edit operations and corresponding one or more positions provides more than one solution. For example, during the recursion to calculate the edit distance, *d*_{*i*,*j*} = min{*d*_{*i*,*j*-1} + 1,*d*_{*i*-1,*j*} + 1, *d*_{*i*-1,*j*-1} + *cost*(*aⱼ*,*bᵢ*)}, more than one path, i.e more than one sequence of insertion, deletion and/or substitution operations may result in a same edit distance. In the embodiment, instead of maintaining a unique path to an entry in the distance matrix, the multiple paths with a same edit distance are maintained. Each test sequence is modified to more than one modified sequence with correct length, which all have the same edit distance to the reference sequence. Each of these modified sequences is added to the first set, i.e. the reference subset. This may further improve the detection performance.

In one embodiment the test sequence is discarded if said minimum number of edit operations is above a threshold. If the test sequence and the reference sequence are copies of the same code symbol sequence, i.e. originate from the same original oligo, the edit distance can be expected to be relatively small. If the edit distance is too large, the test and reference sequences may have not been generated from the same original oligo. In this case no modification will be applied to the test sequence and the test sequence is deleted from the second set, i.e. the test subset. This threshold depends, for example, on the length of, i.e. the amount or number of code symbols contained in, a code symbol sequence.

In one embodiment a copy with a length greater than the correct length is determined as the reference sequence and a copy with a length smaller than the correct length is selected as the test sequence, the minimum number of edit operations and corresponding positions within the test sequence for transformation of the reference sequence into the test sequence are calculated, and one or more modified sequences of the correct length are obtained by modifying the test sequence at one or more subsets of the corresponding positions, if said plurality of potentially incorrect copies comprises no copy of the correct length. Similarly, in another embodiment one copy with length smaller than the correct length is used as reference sequence for comparison with test sequences with lengths greater than the correct length. As an example, two code symbol sequences, one with an insertion and the other with a deletion may be considered. The one with an insertion can be used as reference sequence, and two insertion positions will be determined to transform the one with insertion to the other one with deletion. Potentially, one of these two positions locates the position of an insertion. An integrity check can be performed twice while deleting one symbol of the sequence with an insertion at these two potential insertion positions at each time. If for one position to the integrity check passes, the position where an insertion actually happened has been located. Alternatively, one symbol can be inserted at these two potential insertion positions to the sequence with a deletion, and an integrity check can be performed to check whether the modified sequence with correct length is the original sequence.

In one embodiment of the data processing apparatus the nucleic acid sequencer module is connectable to a nucleic acid storage container and is configured to sequence multiple copies of nucleic acid molecules stored in said nucleic acid storage container to obtain multiple copies of code symbol sequences. In another embodiment the data processing apparatus is connected to the nucleic acid sequencer module instead of comprising it.

While not explicitly described, the presented embodiments may be employed in any combination or sub-combination.

### BRIEF DESCRIPTION OF THE DRAWINGS

- Fig. 1: schematically illustrates a first example of an embodiment of a method of operating a data processing apparatus to recover a correct copy of a code symbol sequence from a plurality of potentially incorrect copies of the code symbol sequence;
- Fig. 2: schematically illustrates an example of a distance matrix and computation paths for determining the minimum edit distance using a dynamic programming approach;
- Fig. 3: schematically illustrates a second example of an embodiment of a method of operating a data processing apparatus to recover a correct copy of a code symbol sequence from a plurality of potentially incorrect copies of the code symbol sequence;
- Fig. 4: schematically illustrates a first example of an embodiment of a data processing apparatus for recovering a correct copy of a code symbol sequence from a plurality of potentially incorrect copies of the code symbol sequence; and
- Fig. 5: schematically illustrates a second example of an embodiment of a data processing apparatus for recovering a correct copy of a code symbol sequence from a plurality of potentially incorrect copies of the code symbol sequence.

### DETAILED DESCRIPTION OF EMBODIMENTS

For a better understanding of the principles, example embodiments are explained in more detail in the following description with reference to the figures. It is understood that the present solution is not limited to these exemplary embodiments and that specified features can also expediently be combined and/or modified without departing from the scope of the present principles as defined in the appended claims.

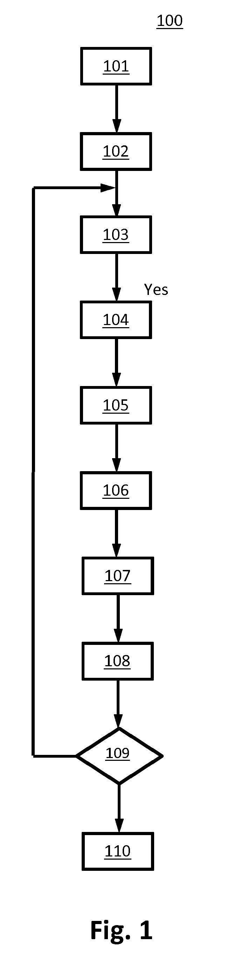

Referring to Fig. 1, an embodiment of a method 100 of operating a data processing apparatus to recover a correct copy of a code symbol sequence from a plurality of potentially incorrect copies of the code symbol sequence is schematically illustrated. The method may, for example, be computer implemented.

In the shown embodiment, in a first step 101 a plurality of potentially incorrect copies of a code symbol sequence is obtained from a nucleic acid sequencer device adapted to transform nucleotide sequences into corresponding code symbol sequences. For this, the data processing apparatus executing the method either comprises a nucleic acid sequencer or is connected to the sequencer, which is connected to nucleic acid storage.

In a next step 102 the plurality of potentially incorrect copies is divided into a first set of code symbol sequences of a correct length and a second set of code symbol sequences of incorrect lengths.

Then the following steps 103-108 are recursively performed:
In a next step 103 a reference sequence of the correct length is determined from the first set. Then an integrity check of the reference sequence is performed 104.
In a next step 105 a code symbol sequence is selected from the second set as a test sequence, and in a next step 106 a minimum number of edit operations and corresponding one or more positions within the test sequence for transformation of the reference sequence into the test sequence are calculated to find how to transform one sequence into the other with the minimum number of substitution, deletion, insertion operations, i.e. edit operations.
In a next step 107 a modified sequence of the correct length is obtained by modifying the test sequence at the corresponding one or more positions. Then the modified sequence is added 108 to the first set.

The steps 103-108 are repeated until the integrity check performed in step 104 indicates correctness of the reference sequence 109, i.e. of the next determined reference sequence. If a correct reference sequence has been determined, the processing ends 110. It should be noted that this does not necessarily end the overall processing which may continue, for example, by storing the determined correct reference sequence in a memory, decoding the user data encoded in the determined correct reference sequence and/or processing further copies of other code symbol sequences obtained from the nucleic acid sequencer.

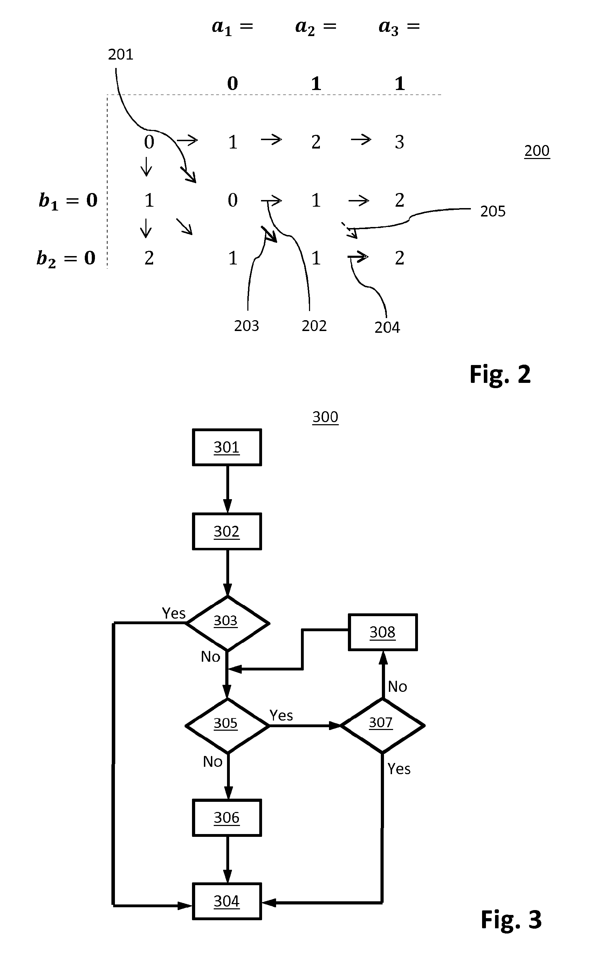

The example embodiment is further explained using Fig. 2, which schematically illustrates an example of a distance matrix 200, shown by means of a table, and computation paths for determining the minimum edit distance using a dynamic programming approach.

For example, there are two sequences ***a*** = (*a*₁,*a*₂,...,a*ₙ*) and *b* = (*b₁*,*b*₂,...,*bₘ*), which are referred to as reference sequence and test sequence, respectively. In the shown example, ***a*** = (*a*₁,*a*₂,*a*₃) = (0,1,1) and ***b*** = (*b*₁,*b*₂) = (0,0). It is assumed that ***b*** is obtained from ***a*** via substitution, deletion, and insertion operations. To find the minimum number of such operations, an (*m* + 1) × (*n* + 1) distance matrix 200 is constructed, here (2 + 1) × (3 + 1), where entries in the distance matrix, {*d*_{*i*,*j*}, 0 ≤ *i* ≤ m, 0 ≤ *j* ≤ *n*}, denote the minimum edit distance for any transformation from (*a*₁,...,*aⱼ*) to (*b*₁,...,*bᵢ*). The distance *d*_{*i*,*j*} is then calculated recursively as follows:
*d_{i,j}* = min{*d*_{*i*,*j*-1} + 1,*d*_{*i*-1,*j*} + 1,*d*_{*i*-1},_{*j*-1} + *cost*(*aⱼ,bᵢ*)}, where the distance increase due to an insertion (transformation from a_{*j*-1} to *bᵢ*) or a deletion (transformation from a*ⱼ* to *b*_{*i*-1}) is 1 and the distance increase due to substitution is *cost*(a*ⱼ*,*bᵢ*). In the shown example, the distance increase *cost*(*aⱼ*,*bᵢ*) is chosen as *cost*(*aⱼ*,*bᵢ*) = 0 if *aⱼ* is equal to *bᵢ*, and *cost(aⱼ*,*bᵢ*) = 1 if *aⱼ* differs from *bᵢ*. In other embodiments, the distance increases may be defined differently for insertion, deletion, or substitution errors, dependent on application cases. At the end of the recursions, the minimum edit distance between ***a*** and ***b*** is determined as *d*_{*m*,*n*}, i.e. *d*_{2,3} in the shown example.

The minimum edit distance between (*a*₁,*a*₂,*a*₃) = (011) and (*b*₁,*b*₂) = (00) is computed using dynamic programming. The distance matrix has 12 entries, denoted by *d*_{*i*,}*ⱼ,* 0 ≤ *i* ≤ 2,0 ≤ *j* ≤ 3, i.e. d_{0,0} = 0, *d*_{0,1} = 1, *d*_{0,2} = 2, *d*_{0,3} = 3, *d*_{1,0} = 1, *d*₁,₁ = 0, *d*_{1,2} = 1, *d*_{1,3} = 2, *d*_{2,0} = 2, *d*_{2,1} = 1, *d*_{2,2} = 1, and *d*_{2,3} = 2, where *d*_{2,3} = 2 denotes the minimum edit distance. There is a unique path from the beginning (*d*_{0,0} = 0 as initialization) to each entry in the distance matrix, indicated by solid directed arrows, where a horizontal arrow → indicates a deletion, (in the following denoted by "D"), a vertical arrow ↓ indicates an insertion (in the following denoted by "I") and a diagonal arrow ↘ means a potential substitution (in the following denoted as "=" if *aⱼ* is equal to *bᵢ*; as "S" if *aⱼ* is not equal to *bᵢ*). In the following, "=" is also called copy operation, and "S" is called substitution operation.

As an example, for *d*_{1,2} = 1, which corresponds to transform a sequence (*a*₁,*a*₂) = (01) to another sequence (*b₁*) = (0), the corresponding edit operations 201, 202 are obtained by tracing back from *d*_{1,2} to the starting point *d*_{0,0}, which are determined as "=D", i.e., one copy and one deletion operation. Similarly, the edit operations 201, 203, 204 to transform (*a*₁,*a*₂,*a*₃) = (011) to (*b*_{1,}*b*₂)=(00) are determined as "=SD", as shown by the path with bold arrows, namely, copy, substitution, deletion.

During the recursion to calculate the edit distance, *d*_{*i*,*j*} = min{*d*_{*i*,*j*-1} + 1,*d*_{*i*-1,*j*} + 1,*d*_{*i*-1},_{*j*-1} + *cost*(*aⱼ*,*bᵢ*)}, there can be more than one path resulting in a same edit distance. For the example shown in Fig. 2, indicated by a dashed arrow 205, *d*_{2,3} = 2 can also be obtained by a substitution from *d*_{1,2}. The corresponding operation path 201, 202, 205 to transform (*a*₁,*a*₂,*a*₃) = (011) to (*b*₁,*b*₂) = (00) then becomes "=DS".

Referring to Fig. 3, a second example of an embodiment of a method 300 of operating a data processing apparatus to recover a correct copy of a code symbol sequence from a plurality of potentially incorrect copies of the code symbol sequence is schematically shown. In the context of recovering code symbol sequences by sequencing synthesized oligos, it is assumed that in a preprocessing step 301 readout code symbol sequences corresponding to the same address are collected in a set or cluster of code symbol sequences. This is achieved, e.g., by using a strong error correction code to protect the contained addresses. Upon reading out, addresses are decoded by an error correction decoder. Then the code symbol sequences are clustered according to decoded addresses.

Then for at least some of the clusters the following is performed:
In a subset generation step 302 the cluster of code symbol sequences (associated to a same address) is divided into two subsets: a first set or reference subset containing readout code symbol sequences with correct sequence length, and a second set or test subset containing readout code symbol sequences with incorrect sequence lengths.

In a next step 303, it is checked if the reference subset is empty. If this is true ("Yes"), no recovery of the code symbol sequence according to the presented approach is performed and the processing is stopped 304.

Otherwise ("No") in a next step 305 it is checked whether a search for edit distances is necessary. To indicate the necessity, an integrity check mechanism, e.g., by means of cyclic redundancy check, can be employed. If there is a code symbol sequence with correct length satisfying the integrity check ("No"), no search for a minimum edit distance is necessary, as said particular code symbol sequence is detected as the original one and is delivered 306 as the code symbol sequence estimated to be correct. Then the processing for this cluster having a same address ends 304 (and may proceed with the next cluster).

Otherwise, if there are sufficient readout code symbol sequences of correct length but not satisfying the integrity check, step 305 comprises performing a symbol-wise majority voting and subsequently performing the integrity check to find whether the resulting code symbol sequence after majority voting is correct. If that is the case, no search for edit distances is necessary, either, and the resulting code symbol sequence is detected as original code symbol sequence and is delivered 306 as the code symbol sequence estimated to be correct. Otherwise ("Yes"), the resulting code symbol sequence after majority voting is used as a reference sequence, and the processing is continued with step 307.

If majority voting is not possible and no code symbol sequence in the reference subset satisfies the integrity check, an arbitrary code symbol sequence in the reference subset is chosen as reference sequence. In another embodiment, each code symbol sequence in the reference subset is chosen as reference sequence.

In a next step 307 it is checked, if the test subset is empty. In that case ("Yes") no recovery of a correct code symbol sequence is possible with this approach and the detection is stopped 304. Otherwise ("No"), in a next step 308 edit operations from the reference sequence to a sequence in the test subset, referred to as a test sequence, are identified via dynamic programming, the test sequence is modified accordingly and the reference and test subsets are updated.

Typically, if the test sequence and the reference sequence originate from sequencing the same original oligo, the edit distance will be small. If the edit distance is above a threshold (which may depend, e.g., on the oligo length), this indicates that the test sequence and the reference sequence were not generated from the same original oligo, and no modification will be applied to the test sequence, the test sequence is deleted from the test subset, and step 307 is repeated.

Otherwise, i.e. for a small edit distance between the test and the reference sequence, the test oligo is modified to get a correct sequence length. More specifically, symbols of the test oligo at insertion positions are deleted and the symbols of the reference sequence at deletion positions are copied to the test sequence at appropriate positions, as described below by way of example. In step 308 the test sequence is deleted from the test subset, and the modified sequence is added to the reference subset. Then the processing is continued with step 305.

The principle of the method illustrated in Fig. 3 is further explained below by means of an example using a binary alphabet, where the extension to other alphabet size cases is straightforward.

As an example, it is assumed that an original oligo stores a bit sequence "011010" of length 5, where the last bit is an odd parity check bit and used for integrity check of the oligo. After sequencing, it is assumed that three corresponding erroneous readout sequences are obtained 301: "0111010" (insertion error), "011011" (substitution error), "01110" (deletion error). According to the method shown in Fig. 3, in step 302 a reference subset is obtained as {"011011"} with a reference sequence "011011 ", and a test subset is obtained as {"0111010", "01110"}.

The reference sequence "011011" does not pass the integrity check (odd parity check fails) and a search for edit operations 305 is necessary. The edit operations from the reference sequence "011011" to the test sequence "0111010" are identified via dynamic programming as "===I==S", i.e., "011011" can be transformed into "0111010"via a series of copy, copy, copy, insertion, copy, copy, substitution operations. Since an insertion takes place at the fourth position during the transformation, the corresponding symbol in the test sequence is deleted. Consequently, in step 308 the test sequence is modified to "011010". The reference subset is then updated to {"011010", "011011"}, and the test subset is reduced to {"01110"}. "011010" will now pass the integrity check, and will be delivered 306 as recovered oligo.

Alternatively, if the other test sequence "01110" is selected from the test subset for comparison with the reference sequence, the edit operations can be determined as "===D=S". Since a deletion occurs at the fourth position during the transformation from "011011" to "01110", the fourth symbol in the reference sequence is inserted into the test oligo after its third symbol, and the modified test sequence results to "011010", which is included in the updated reference subset. Again, "011010" also passes the integrity check, and can be delivered 306 as recovered code symbol sequence.

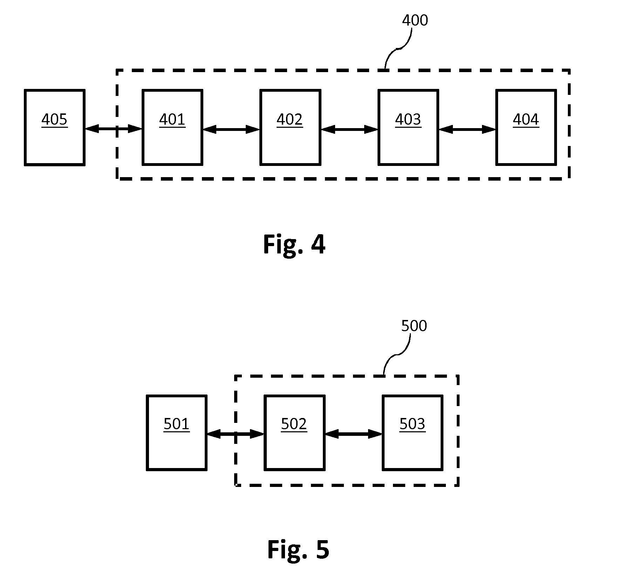

According to further aspects of the present principles, examples of embodiments of a data processing apparatus for recovering a correct copy of a code symbol sequence from a plurality of potentially incorrect copies of the code symbol sequence are schematically shown in Fig. 4 and Fig. 5. The apparatuses 400, 500 allow implementing the advantages and characteristics of the described method as part of a data processing apparatus.

Referring to Fig. 4, a first example of a data processing apparatus 400 for recovering a correct copy of a code symbol sequence from a plurality of potentially incorrect copies of the code symbol sequence is schematically illustrated. It comprises a nucleic acid sequencer module 401 configured to transform nucleotide sequences into corresponding code symbol sequences. In the shown example, the nucleic acid sequencer module 401 is connected to obtain synthesized oligos from a nucleic acid container 405. In other embodiments the nucleic acid sequencer module 401 is connectable to or comprises the nucleic acid container 405.

The nucleic acid sequencer module 401 is connected to an interface module 402 configured to obtain the plurality of potentially incorrect copies of the code symbol sequence from the nucleic acid sequencer module 401. In another embodiment the nucleic acid sequencer module 401 is connectable to the data processing apparatus 400 via interface module 402 instead of being comprised in the apparatus 400. Further, in one embodiment the interface module 402 is configured to receive transformed code symbol sequences (not necessarily incorrect) from the nucleic acid sequencer module and to evaluate an address part of the transformed code symbol sequences, being protected by an error correction coding, and the interface module 402 comprises an address error correction decoder unit for correcting addresses before grouping the sequences into copies of same code symbol sequences and an integrity check unit configured to determine a correctness of the code symbol sequences and to stop processing and output the code symbol sequence, if at least one of a plurality of copies of the same code symbol sequence is found correct.

The interface module 402 is connected to a set generating module 403 configured to divide the plurality of potentially incorrect copies into a first set of code symbol sequences of a correct length and a second set of code symbol sequences of incorrect lengths.

The set generating module 403 is connected to a correction module 404 which is configured to recursively
- determine a reference sequence of the correct length from the first set;
- perform an integrity check of the reference sequence;
- select a code symbol sequence from the second set as a test sequence;
- calculate a minimum number of edit operations and corresponding one or -more positions within the test sequence for transformation of the reference sequence into the test sequence;
- obtain a modified sequence of the correct length by modifying the test sequence at said corresponding one or more positions; and
- add the modified sequence to the first set;
until the integrity check indicates correctness of the reference sequence. As explained above, the determination of the reference sequence involves a processing or evaluation of the sequences contained in the first set, i.e. the reference subset. Therefore, with each recursion a different sequence may be determined as the reference sequence. The apparatus 400 comprises a memory (not shown), e.g. for storing code symbol sequences. In another embodiment the apparatus 400 is connected to a memory module.

In the embodiment shown in Fig. 4 the shown modules directly communicate with each other. In another embodiment the apparatus comprises a controller module connected to one or more of the shown modules and controls their communication.

Depending on the embodiment, the nucleic acid sequencer module 401, the input module 402, the set generating module 403 and the correction module 404 are provided as separate devices or jointly as one device. In one embodiment, one or more of the input module 402, the set generating module 403 and the correction module 404 are provided as functionality carried out or implemented by a processor, microprocessor, microcontroller or other processing device, computer or other programmable apparatus or processor assembly connected to or comprising a memory.

Referring to Fig. 5, a second example of a data processing apparatus 500 for recovering a correct copy of a code symbol sequence from a plurality of potentially incorrect copies of the code symbol sequence is schematically illustrated. The shown data processing apparatus 500 is connected or connectable to a nucleic acid sequencer device 501 and comprises a processor 502 and a memory device 503 storing instructions that, when executed, cause the processor 502 to
- obtain a plurality of potentially incorrect copies of a code symbol sequence from a nucleic acid sequencer device adapted to transform nucleotide sequences into corresponding code symbol sequences;
- divide said plurality of potentially incorrect copies into a first set of code symbol sequences of a correct length and a second set of code symbol sequences of incorrect lengths; and recursively
- determine a reference sequence of the correct length from the first set;
- perform an integrity check of the reference sequence;
- select a code symbol sequence from the second set as a test sequence;
- calculate a minimum number of edit operations and corresponding one or more positions within the test sequence for transformation of the reference sequence into the test sequence;
- obtain a modified sequence of the correct length by modifying the test sequence at said corresponding one or more positions; and
- add the modified sequence to the first set;
until the integrity check indicates correctness of the reference sequence.

As an example, the processor 502 can be a processor adapted to perform the steps according to one of the described methods. In one embodiment according to the present principles, said adaptation comprises that the processor is configured, e.g. programmed, to perform steps according to one of the described methods of operating a data processing apparatus to recover a correct copy of a code symbol sequence from a plurality of potentially incorrect copies of the code symbol sequence.

A part of the shown memory device 503 can be a non-transitory program storage device readable by the processor 502, tangibly embodying a program of instructions executable by the processor 502 to perform program steps as described herein according to the present principles.

Aspects of the present principles can be embodied as a method, an apparatus, a system, a computer program product or a computer readable medium, i.e. the present principles may be implemented in various forms of hardware, software, firmware, special purpose processors, or a combination thereof. Accordingly, aspects of the present principles can take the form of a hardware embodiment, a software embodiment or an embodiment combining software and hardware aspects. Aspects of the present principles may, for example, at least partly be implemented in a computer program comprising code portions for performing steps of the method according to an embodiment of the present principles when run on a programmable apparatus or enabling a programmable apparatus to perform functions of an apparatus, device or system according to an embodiment of the present principles. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more processors/central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device. Unless stated otherwise, terms such as "first" and "second" are used to arbitrarily distinguish between the elements the terms describe and are not necessarily intended to indicate temporal or other prioritization of the elements. Any connection shown may be a direct connection or an indirect connection. Further, those skilled in the art will recognize that the boundaries between logic blocks are merely illustrative and that alternative embodiments may merge logic blocks or impose an alternate decomposition of functionality upon various logic blocks.

### CITATION LIST

[I] George M. Church, Yuan Gao, Sriram Kosuri, "Next-Generation Digital Information Storage in DNA", Science Vol. 337, 28 September 2012.
[II] Nick Goldman et al., "Towards practical, high-capacity, low-maintenance information storage in synthesized DNA", Nature Vol. 494, January 2013.

## Claims

1. A method (100) of operating a data processing apparatus to recover a correct copy of a code symbol sequence from a plurality of potentially incorrect copies of the code symbol sequence, comprising
- obtaining (101) a plurality of potentially incorrect copies of a code symbol sequence from a nucleic acid sequencer device adapted to transform nucleotide sequences into corresponding code symbol sequences;
- dividing (102) said plurality of potentially incorrect copies into a first set of code symbol sequences of a correct length and a second set of code symbol sequences of incorrect lengths; and
- recursively
- determining (103) a reference sequence of the correct length from the first set;
- performing (104) an integrity check of the reference sequence;
- selecting (105) a code symbol sequence from the second set as a test sequence;
- calculating (106) a minimum number of edit operations and corresponding one or more positions within the test sequence for transformation of the reference sequence into the test sequence;
- obtaining (107) a modified sequence of the correct length by modifying the test sequence at said corresponding one or more positions; and
- adding (108) the modified sequence to the first set;
until the integrity check indicates correctness of the reference sequence.

2. The method according to claim 1, wherein the determining (103) of the reference sequence comprises performing a majority vote over the first set of code symbol sequences.

3. The method according to claim 1 or claim 2, wherein the obtaining (101) of a plurality of potentially incorrect copies of a code symbol sequence comprises
- obtaining a plurality of copies of the code symbol sequence and performing initial integrity checks; and
- selecting a copy of the code symbol sequence as a correct copy if the corresponding initial integrity check indicates no error.

4. The method according to any of the preceding claims, wherein the calculating (106) comprises for a reference sequence ***a*** = (*a*₁,*a*₂,...,a*ₙ*) and a test sequence ***b*** = (*b*₁,*b*₂,...,*bₘ*) determining an (m + 1) × (*n* + 1) distance matrix, where distance entries {*d*_{*i*,*j*},0 ≤ *i* ≤ *m*, 0 ≤ *j* ≤ *n*} denote a corresponding minimum edit distance for a transformation from (*a*₁,...,*aⱼ*) to (*b*₁,...,*bᵢ*).

5. The method according to claim 4, wherein the distance *d*_{*i*,*j*} is calculated recursively as *d*_{*i*,*j*} = min{*d*_{*i*,*j*-1} + 1, *d*_{*i*-1,*j*} + 1,*d*_{*i*-1},_{*j*-1} + *cost*(*aⱼ*,*bᵢ*)}, where *cost*(*aⱼ*,*bᵢ*) represents a distance increase due to substitution and *d*_{*m*,*n*} represents the minimum edit distance between the reference sequence ***a*** and the test sequence ***b*.**

6. The method according to any of the preceding claims, wherein the obtaining (101) of the plurality of potentially incorrect copies of the code symbol sequence comprises evaluating an address part being protected by an error correction coding, of transformed code symbol sequences received from the nucleic acid sequencer device.

7. The method according to any of the preceding claims, wherein the selecting (105) of the test sequence from the second set, the calculating (106) of the minimum numberof edit operations and corresponding one or more positions, the obtaining (107) of the modified sequence and the adding (108) of the modified sequence to the first set are performed for a plurality of test sequences in parallel.

8. The method according to any of the preceding claims, wherein, if the calculating (106) of the minimum number of edit operations and corresponding one or more positions provides more than one solution, more than one modified sequence is obtained from the test sequence and added to the first set.

9. The method according to any of the preceding claims, wherein said test sequence is discarded if said minimum number of edit operations is above a threshold.

10. The method according to claim 1, wherein, if said plurality of potentially incorrect copies comprises no copy of the correct length, a copy with a length greater than the correct length is determined as the reference sequence and a copy with a length smaller than the correct length is selected as the test sequence, the minimum number of edit operations and corresponding positions within the test sequence for transformation of the reference sequence into the test sequence are calculated, and one or more modified sequences of the correct length are obtained bymodifying the test sequence at one or more subsets of the corresponding positions.

11. A data processing apparatus (400) for recovering a correct copy of a code symbol sequence from a plurality of potentially incorrect copies of the code symbol sequence, comprising
- a nucleic acid sequencer module (401) configured to transform nucleotide sequences into corresponding code symbol sequences;
- an interface module (402) configured to obtain a plurality of potentially incorrect copies of a code symbol sequence from the nucleic acid sequencer module;
- a set generating module (403) configured to divide said plurality of potentially incorrect copies into a first set of code symbol sequences of a correct length and a second set of code symbol sequences of incorrect lengths; and
- a correction module (404) configured to recursively
- determine a reference sequence of the correct length from the first set;
- perform an integrity check of the reference sequence;
- select a code symbol sequence from the second set as a test sequence;
- calculate a minimum number of edit operations and corresponding one or - more positions within the test sequence for transformation of the reference sequence into the test sequence;
- obtain a modified sequence of the correct length by modifying the test sequence at said corresponding one or more positions; and
- add the modified sequence to the first set;
until the integrity check indicates correctness of the reference sequence.

12. The apparatus according to claim 11, wherein the interface module (402) is configured to receive transformed code symbol sequences from the nucleic acid sequencer module (401) and to evaluate an address part of the transformed code symbol sequences being protected by an error correction coding.

13. A computer program, comprising code instructions executable by a processor for implementing a method for recovering a correct copy of a code symbol sequence from a plurality of potentially incorrect copies of the code symbol sequence, comprising
- obtaining (101) a plurality of potentially incorrect copies of a code symbol sequence from a nucleic acid sequencer device adapted to transform nucleotide sequences into corresponding code symbol sequences;
- dividing (102) said plurality of potentially incorrect copies into a first set of code symbol sequences of a correct length and a second set of code symbol sequences of incorrect lengths; and
- recursively
- determining (103) a reference sequence of the correct length from the first set;
- performing (104) an integrity check of the reference sequence;
- selecting (105) a code symbol sequence from the second set as a test sequence;
- calculating (106) a minimum number of edit operations and corresponding one or more positions within the test sequence for transformation of the reference sequence into the test sequence;
- obtaining (107) a modified sequence of the correct length by modifying the test sequence at said corresponding one or more positions; and
- adding (108) the modified sequence to the first set;
until the integrity check indicates correctness of the reference sequence.

14. A non-transitory program storage device, readable by a computer, tangibly embodying a program of instructions executable by the computer to perform a method for recovering a correct copy of a code symbol sequence from a plurality of potentially incorrect copies of the code symbol sequence, comprising
- obtaining (101) a plurality of potentially incorrect copies of a code symbol sequence from a nucleic acid sequencer device adapted to transform nucleotide sequences into corresponding code symbol sequences;
- dividing (102) said plurality of potentially incorrect copies into a first set of code symbol sequences of a correct length and a second set of code symbol sequences of incorrect lengths; and
- recursively
- determining (103) a reference sequence of the correct length from the first set;
- performing (104) an integrity check of the reference sequence;
- selecting (105) a code symbol sequence from the second set as a test sequence;
- calculating (106) a minimum number of edit operations and corresponding one or more positions within the test sequence for transformation of the reference sequence into the test sequence;
- obtaining (107) a modified sequence of the correct length by modifying the test sequence at said corresponding one or more positions; and
- adding (108) the modified sequence to the first set;
until the integrity check indicates correctness of the reference sequence.

15. A data processing apparatus (500) for recovering a correct copy of a code symbol sequence from a plurality of potentially incorrect copies of the code symbol sequence, comprising
- a processor (502) and
- a memory device (503) storing instructions that, when executed, cause the processor (502) to
- obtain a plurality of potentially incorrect copies of a code symbol sequence from a nucleic acid sequencer device adapted to transform nucleotide sequences into corresponding code symbol sequences;
- divide said plurality of potentially incorrect copies into a first set of code symbol sequences of a correct length and a second set of code symbol sequences of incorrect lengths; and
recursively
- determine a reference sequence of the correct length from the first set;
- perform an integrity check of the reference sequence;
- select a code symbol sequence from the second set as a test sequence;
- calculate a minimum number of edit operations and corresponding one or more positions within the test sequence for transformation of the reference sequence into the test sequence;
- obtain a modified sequence of the correct length by modifying the test sequence at said corresponding one or more positions; and
- add the modified sequence to the first set;
until the integrity check indicates correctness of the reference sequence.
